# EUROPEAN PATENT APPLICATION

(11) **EP 3 651 302 A1**
(43) Date of publication of application: **13.05.2020**
(21) Application number: 18204886.8
(22) Date of filing: 07.11.2018
(51) Int. Cl.: H02J 3/36, F03D 7/02, H02J 3/38

(54) **SYSTEM AND METHOD FOR ENERGISING AN AC NETWORK OF AN OFFSHORE WIND FARM**

(71) Applicant: Danmarks Tekniske Universitet, 2800 Kgs. Lyngby (DK)
(72) Inventor: Bidadfar, Ali, 1620 Copenhagen (DK); Saborío-Romano, Oscar, 4000 Roskilde (DK); Sørensen, Poul Ejnar, 2500 Valby (DK); Cutululis, Nicolaos Antonio, 3650 Ølstykke (DK); Altin, Müfit, 2300 Copenhagen S (DK); Göksu, Ömer, 1813 Frederiksberg (DK)
(74) Representative: Høiberg P/S

(57) **Abstract**

The present disclosure relates to a method and a system for energising an offshore wind farm, in particular energisation of offshore wind power plants connected to high-voltage direct-current links. One embodiment relates to a method for energising an offshore AC network of a HVDC-connected offshore wind farm, the method comprising the steps of transporting auxiliary DC power through the HVDC cable from an onshore to an offshore HVDC station; transporting auxiliary DC power further from the offshore HVDC station to a DC link of a (back-to-back) converter of a wind turbine in the offshore wind farm through an auxiliary DC cable thereby bypassing the converter of the offshore HVDC station; and energising the offshore AC network using a grid-side converter of the first wind turbine to convert the auxiliary DC power to AC power.

## Description

The present disclosure relates to a method and a system for energising an offshore wind farm, in particular energisation of offshore wind power plants connected to high-voltage direct-current links.

### Background of invention

Generally, an offshore wind power plant (OWPP) comprises a plurality of wind turbines that generate electricity. For various reasons, wind turbines (WTs) of an OWPP may need to be shut down for some time. However, wind power plants (WPPs) have auxiliary systems (loads) that need electricity all the time. Such loads can consist of pitch and yaw motors, oil pumps, ventilation and dehumidification systems, navigation lights, and control, protection and communication systems, among others. When WTs produce electricity, such loads consume a portion of their output. During the downtime, an external power source is necessary to keep various systems and components supplied with power as the high voltage direct current (HVDC) connected OWPP have no intrinsic ability to energise the offshore alternating-current (AC) networks. I.e. electricity must be supplied to the auxiliary loads from the networks the OWPPs are connected to, or from local auxiliary energy sources, e.g. batteries or diesel generators. In addition, external power is necessary to be able to re-start the wind turbines after a wind farm downtime.

Upon operation of the OWPP, the electricity produced by the OWPP is transported to the shore, i.e. onshore. The HVDC transmission technology is a suitable option to transport the electricity from remote OWPPs to the shore, typically more than 80 kilometers. In case of HVDC connection, the produced electricity by wind turbines can be converted from AC to DC in the offshore station(s) using different power converter technologies, such as voltage source converters (VSCs), diode rectifiers (DRs) and thyristor-based line-commutated converters (LCCs). The use of VSCs in their offshore stations allows OWPPs also to energise their offshore AC networks and supply their auxiliary loads by importing the necessary electricity from their DC connections. This way of energisation, however, cannot be done by OWPPs connected to DC networks via DRs or LCCs, in which case they need to be energised by other means. This problem is also the case for OWPPs connected to DC networks via VSCs, when their offshore stations are not operational.

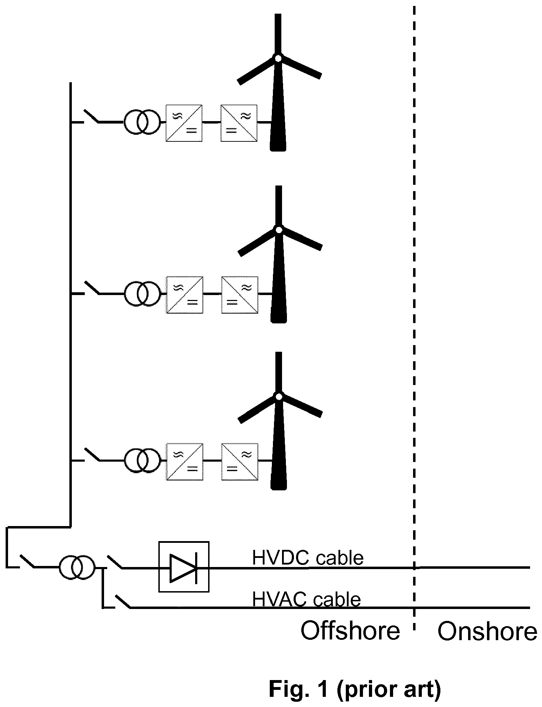

In case the HVDC uses DRs (or LCCs) in the offshore station a high voltage AC (HVAC) cable, in parallel to the HVDC link, can transport the energising power from onshore to offshore (cf. Fig. 1 which shows a prior art solution). But the additional AC link adds considerably to the overall cost of the wind farm and results in some technical challenges.

Diesel generators can energise the offshore AC network in case that the offshore converters or offshore main transformers in VSC-based HVDC are not operational. This solution requires additional space in offshore platforms, thereby imposing an additional cost. Moreover, diesel generators need fuel and regular maintenance.

### Summary of invention

The purpose of the present invention is to employ a DC-to-DC energisation concept for energising a HVDC-connected offshore wind power plant. The invention overcomes the economic and technical drawbacks of the prior art of providing auxiliary power to the wind turbines of an offshore wind power plant.

A first embodiment of the present disclosure relates to a method for energising an offshore AC network of an HVDC-connected offshore wind power plant. The method comprises the steps of transporting auxiliary DC power through the HVDC cable from onshore to an offshore HVDC station, the offshore HVDC station typically having a power converter. Auxiliary DC power can then be transported further from the offshore HVDC station to a DC link of a (back-to-back) converter of a first wind turbine in the offshore wind farm, this first wind turbine may be referred to as the energising wind turbine because it will have the role of energising the offshore wind farm. The DC power transport can advantageously be provided through an auxiliary DC cable thereby bypassing the converter of the offshore HVDC station. The offshore AC network can then be energised using the grid-side converter of the energising wind turbine, i.e. to convert the auxiliary DC power to AC power.

Another embodiment relates to a power transmission system for transmission of power between an offshore wind farm and onshore, e.g. an onshore HVDC station, comprising at least a first voltage source converter pair of a first wind turbine used for energisation. A front-end voltage source converter may be arranged to convert the local DC electricity to AC electricity contributing to offshore wind farm AC electricity. A power electronic converter, such as a voltage source converter, diode rectifier or thyristor-based converter, can be provided for converting the high-voltage AC electricity to high-voltage DC electricity. Further, a high-voltage DC transmission link can be provided and adapted to transport the high-voltage DC electricity from onshore. Advantageously the high-voltage DC transmission link can further be adapted to transport a low-voltage DC electricity from onshore to an offshore HVDC station. An auxiliary DC cable and at least two auxiliary switches (S1 and S2) can advantageously be provided for connecting the high-voltage DC transmission link to the first wind turbine's DC bus bar, i.e. thereby providing auxiliary power from onshore to the offshore wind farm.

The presently disclosed solution presents a much more cost efficient way of providing auxiliary power to the wind turbines of an offshore wind farm by using the already available HVDC cable, which is normally used to transport the electricity from the OWPP to the shore. The onshore power supplying DC auxiliary power can for example be a grid on the shore side. And the auxiliary power to the wind turbines can be transported from the HVDC cable to the energising wind turbine by means of an (short) auxiliary DC cable.

An OWPP with fully controlled voltage source converters in offshore stations, uses such converters to energise the entire offshore AC network by reversing the power flow direction. The new scheme proposed herein bypasses the offshore substation and can use a wind turbine's VSC to energise the OWPP grid. I.e. the principle of energisation of the OWPP is the same as what is already known to function - but the energisation scheme is new. I.e. the presently disclosed energisation solution is fully feasible.

The prior art energisation methods use either a DC-to-AC (e.g. when the offshore converter is a VSC) or an AC-to-AC connection (e.g. when using an umbilical cable or local auxiliary energy source) to energise the OWPP AC grid. In contrast hereto the presently disclosed solution employs a DC-to-DC energisation concept.

Hence, in the presently disclosed approach the HVDC link can be energised from the onshore AC network with a low DC voltage. The offshore HVDC terminal can be bypassed, and the offshore end of the HVDC link is connected to one of the wind turbine converters' DC link via a short auxiliary DC cable, short in the sense that the auxiliary DC cable is much shorter than the HVCV cable. Additional wind turbine converters can be connected concurrently to enhance the reliability of the energisation. The intended WT front-end converter then starts energising the offshore AC network by increasing its output AC voltage, e.g. with a limited ramp rate. After energising the AC network, the other WT converters can be progressively connected, and besides supplying their auxiliary loads, their DC links can be energised from the AC side.

Compared to prior art energisation solutions the presently disclosed approach therefore has many advantages:
- OWPPs can avoid having auxiliary energy sources, such as diesel generators, in order to stay energised in case of a failure in the offshore substation, or in case of WTs downtime when an OWPP uses unidirectional offshore converters.
- For a retrofit solution, only a short DC cable and few switches are added to the entire system. The switches are relatively small since they are not under high voltage and do not carry large current. The extra / auxiliary DC cable can be a short cable, which connects the offshore substation to one of the nearest wind turbines.
- The long three-phase AC umbilical cable on the seabed can be avoided in case of unidirectional HVDC technology.
- The reliability of the entire system can be increased because the present approach does not add any power electronic component to the system, and it can be implemented in more than one WT, i.e. more than one short DC cable, for redundancy.
- Large inrush currents are avoided in the offshore AC network's transformers since the energising voltage increases with a limited ramp rate.
- No costly components need to be added to the system.
- The presently disclosed approach can be used regardless of the HVDC connection technology.

### Description of drawings

**Fig. 1** is a prior art schematic representation of the energisation process of a diode rectifier based OWPP through an additional AC link laid parallel with the HVCD link in the seabed.

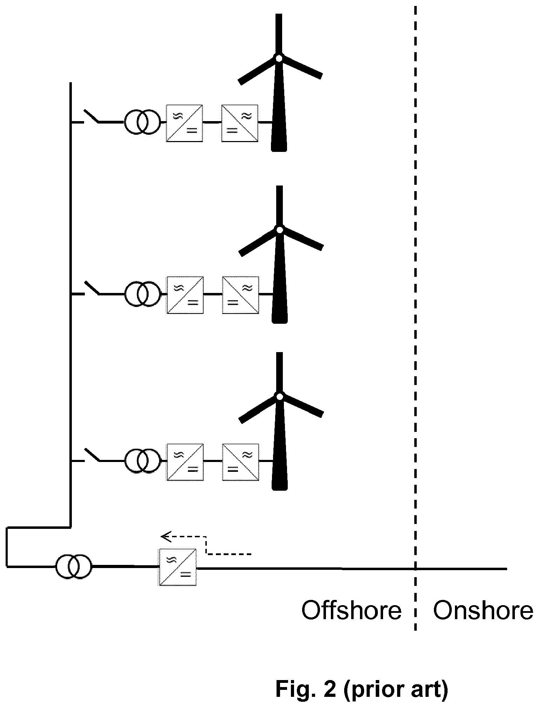

**Fig. 2** is a prior art schematic representation of the energisation process of an OWPP through an HVDC cable using a voltage source converter in the offshore end. The dashed arrowed line indicates the direction of energisation power flow.

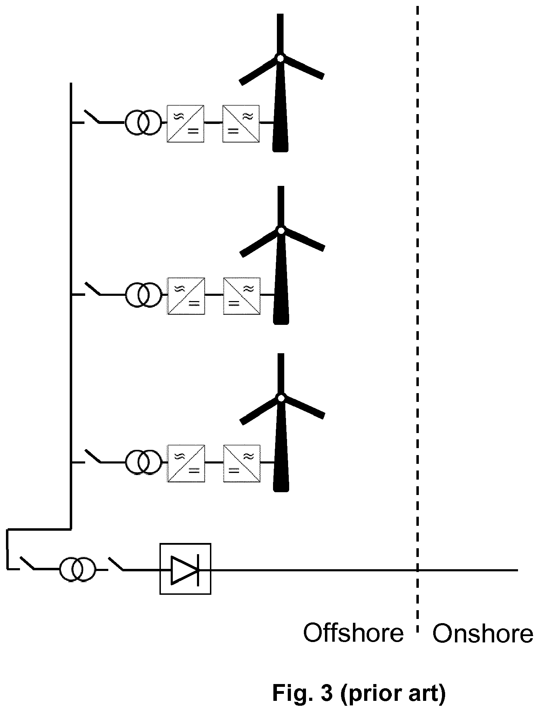

**Fig. 3** is yet another prior art schematic representation of a configuration in which the HVDC contains diode rectifiers at the offshore end. This configuration cannot energise the plant as the unidirectional converter does not allow energy flow in the reverse direction.

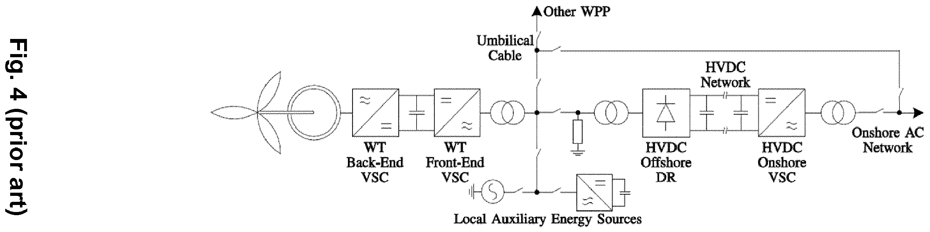

**Fig. 4** is a prior art schematic representation of an offshore AC network energisation methods for OWPPs connected to HVDC networks via diode rectifiers.

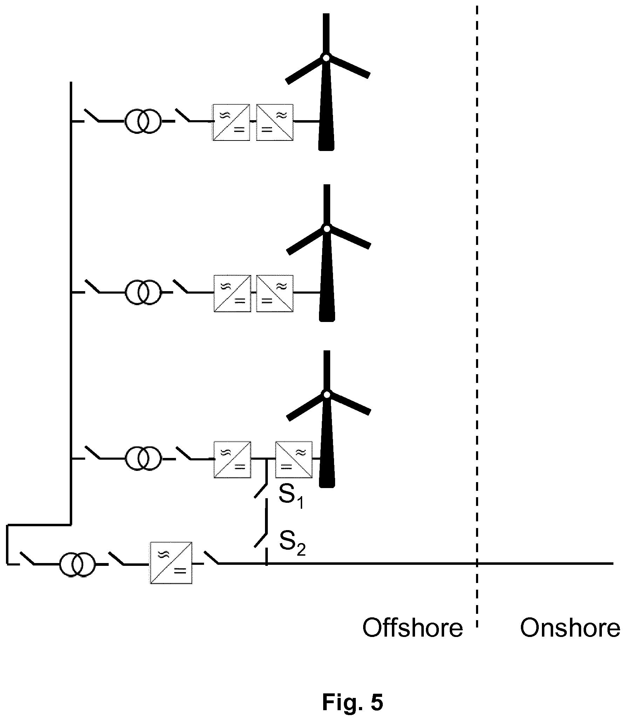

**Fig. 5** is a schematic representation of the general principle of the presently disclosed solution, which takes advantage of the available infrastructure and typically only adding a short length DC cable and two switches (S1 and S2).
**Fig. 6** is a schematic representation of one embodiment of the present invention in which a low direct voltage is fed to the main DC cable from the onshore side.
**Fig. 7** is a schematic representation of one embodiment of the present disclosure in which more than one wind turbine can be connected in order to increase redundancy and reliability of the presently disclosed method.
**Fig. 8** shows one example of the presently disclosed solution for energisation of OWPPs connected to HVDC.

Objects in the diagrams are not necessarily drawn to scale.

### Detailed description of the invention

### Energisation method

In one embodiment, the DC terminals of the offshore HVDC converter are disconnected from the HVDC cable prior to transporting the onshore auxiliary DC power. This converter is also disconnected from the AC side. A low DC voltage is fed to the HVDC cable from the onshore side, low DC voltage typically meaning from 1 to 2 kV nominal rated voltage of the back to back converter / wind turbine. Here the low DC voltage may be controlled from the onshore HVDC station

In the case of faulty or un-operational parts of the offshore AC network, these parts can be isolated before the offshore AC network is energised.

The low DC voltage is applied from the offshore HVDC connections to the DC bus bars of the converter of one wind turbine, called the energising wind turbine, through a low voltage DC cable.

The front-end converter of the energising wind turbine, which now has a low DC voltage on its DC bus bars, starts energising the offshore AC network by steadily increasing the AC voltage to its rated value.

Depending on the size of the offshore AC system, all or some of the wind turbines' transformers are energised. If operational, the main transformer in the offshore HVDC station is also energised.

To increase the redundancy and reliability of the present disclosed energisation approach, there can be more than one energising converter / wind turbine. In case one of the energising wind turbines fails, another wind turbine can start energising the offshore AC network, this wind turbine thereby becoming the energising wind turbine.

The energising wind turbines are preferably the turbines closest to the offshore main station in order to make the auxiliary DC cables as short as possible.

Onshore the connection may be directly to an onshore grid or via a HVDC station/terminal.

### Power transmission system

As stated above a further embodiment of the present disclosure relates to a power transmission system for transmission of power between an onshore power source and an HVDC-connected offshore wind farm. The presently disclosed power transmission system is preferably configured to execute the presently disclosed energisation method. The power transmission system may further comprise a control unit configured to control the auxiliary switch and modes of operation of the power transmission system.

The system may have a first mode of operation, e.g. wherein the auxiliary power switches are open, and the power transmission system is then configured to transport high-voltage DC electricity from the OWPP to the onshore HVDC station.

The system may have a second mode of operation wherein the power transmission system is configured to provide low-voltage DC electricity from the onshore HVDC station to the OWPP. Then the low-voltage DC electricity is transported from the offshore HVDC station through the auxiliary DC cable to the first wind turbine's DC bus bar, then through the front-end voltage source converter to a common offshore AC network. I.e. the presently disclosed system may have at least two different modes of operation.

In a further embodiment the power converter of the system is part of an offshore HVDC station. The system may further comprise a main transformer on the AC side of the power converter. The power transmission system may further comprise an offshore HVDC station switch (S5) for bypassing the offshore HVDC station and a main transformer switch (S6) for disconnecting the main transformer and the power converter.

In a further embodiment the power transmission system comprises at least a first transformer connected to the front end side of the first voltage source converter pair and a switch (S3) located in between and optionally a switch (S4) located between the first transformer and the offshore AC network.

### Example 1

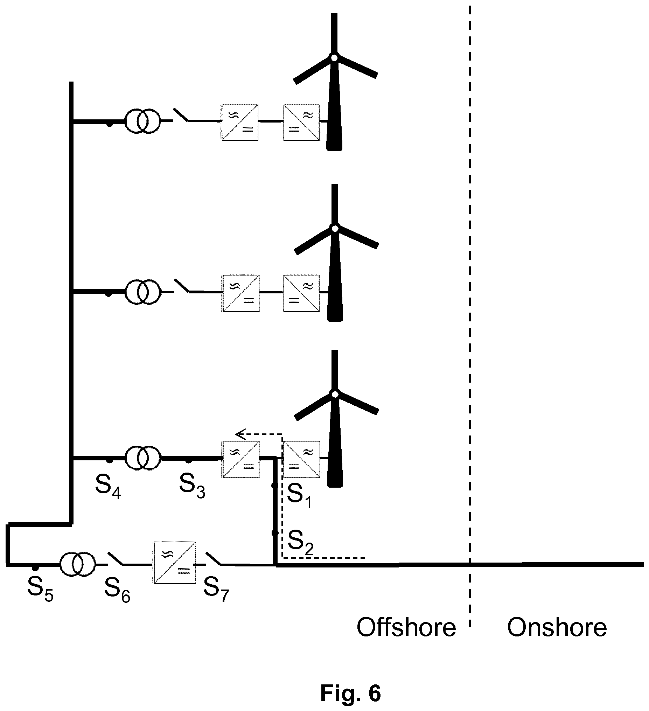

**Fig. 6** is a schematic representation of one embodiment of the present disclosure in which a low direct voltage is fed to the main DC cable from the onshore side. The thick lines indicate the part of the system which is connected to the power and the dashed arrow indicates the direction of the power flow. On the offshore side, the voltage is connected to the DC link of the nearest wind turbine converter which becomes the energising wind turbine. For initializing the energisation the switches S1, S2, S3, S4 and S5 are closed and S6 and S7 are open. A low direct voltage is fed to main DC cable from the onshore end. On the offshore end, the voltage is connected to the DC link of one of the nearest wind turbine converters (D1) by the short cable containing the switches S1 and S2, i.e. the auxiliary DC cable. The converter now starts energising the entire farm with the same principle as a conventional HVDC link with a VSC at offshore side would do.

### Example 2

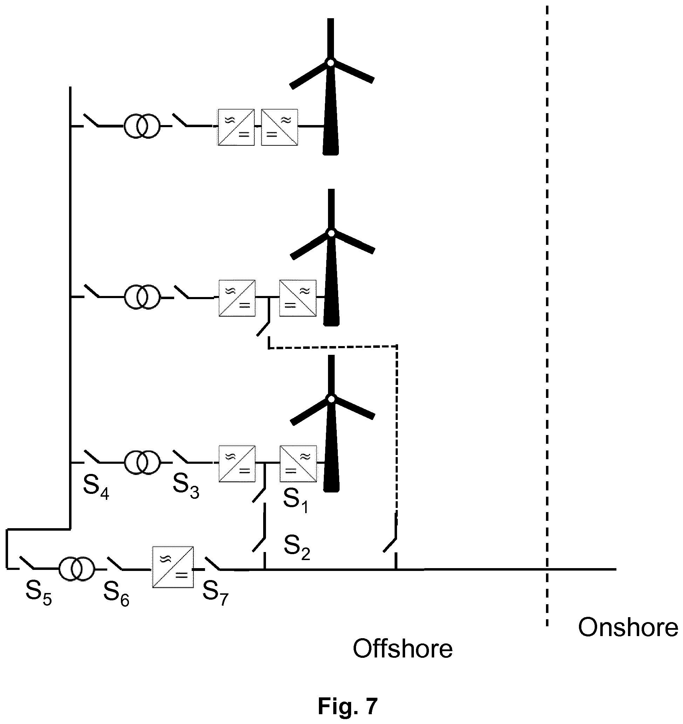

Fig. 7 is a schematic representation wherein more than one wind turbine is connected in order to increase redundancy and reliability of the presently disclosed method, i.e. an additional connection between the offshore station and second wind turbine is added. This configuration allows more than one wind turbine, e.g. in case the first attempted energising turbine is not operational.

### Example 3

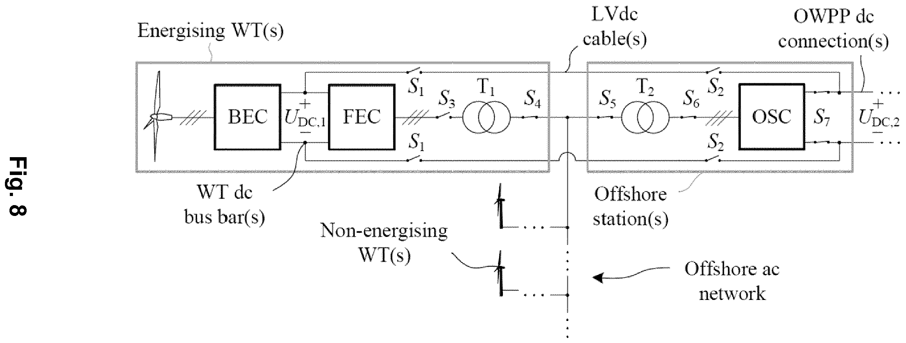

Fig. 8 shows one example of the presently disclosed solution for energisation of OWPPs connected to HVDC. The energisation can be conducted as described in the following steps referring to the numbers of Fig. 8:
- The offshore station converters (OSCs) are bypassed by opening switches S6 and S7. Should, for any reason, transformers T2 or any other devices in the offshore stations not be energised, they can be bypassed by opening switch S5.
- A low direct voltage U_{DC,2} is applied from the OWPP DC connection(s) to the DC bus bar(s) of one or more energising type-4 (fully-rated converter, full-converter) WTs, which are connected to the DC terminals of the offshore station(s) through low-voltage DC (LVdc) cables by closing S1 and S2, U_{DC,1} = U_{DC,2}.
- S3 is closed and the energising wind turbine front-end converters (FECs) energise the offshore AC network, e.g. by steadily increasing the alternating voltage on their terminals to its nominal value - to minimise transformer inrush currents. The corresponding auxiliary systems are thus supplied with electricity, i.e. energisation of the OWPP is provided.

### Example 4

The start-up of an offshore wind power plant connected to non-controlled converters, such as a diode rectifier or thyristor-based converter, in the offshore stations can be fulfilled with the following steps referring to the numbers of Fig. 8:
- The offshore station converters (OSCs) are bypassed by opening switches S6 and S7. In case transformers T2 or any other devices in the offshore stations are not energised, they can be bypassed by opening switch S5.
- A low direct voltage U_{DC,2} is applied from the OWPP DC connection(s) to the DC bus bar(s) of one energising type-4 (fully-rated converter, full-converter) WTs, which are connected to the DC terminals of the offshore station(s) through low-voltage DC (LVDC) cables by closing S1 and S2, U_{DC,1} = U_{DC,2}.
- S3 is closed and the energising wind turbine front-end converters (FECs) energise the offshore AC network, e.g. by steadily increasing the alternating voltage on their terminals to its nominal value in order to minimise transformer inrush currents.
- The yaw and pitching systems (and other auxiliary loads) of a non-energising wind turbine use the available power from the AC grid to make the wind turbine ready, e.g. align the wind turbine towards the wind and set a correct pitch angle for the blades, rotate and produce power. This energised turbine can then connect to the AC grid and help the start-up process of the remaining turbines by injecting required power in the AC grid.
- Similarly the rest of the wind turbines can be prepared and connected to the AC grid.
- The front end converter (FEC) of the energising converter lowers its output power to zero. Now the switches S1 and S2 can open and the low DC voltage source is disconnected from the onshore side.
- S6 and S7 are connected and a high DC voltage is applied to the HVDC link.
- Now the wind turbines can increase their output voltage and produce power and continue their normal operation.

### References

[1] R. M. Blasco-Giménez, S. C. Añó-Villalba, J. Rodríguez-D'Derlée, F. Morant-Anglada, and S. I. Bernal-Pérez, "Distributed Voltage and Frequency Control of Offshore Wind Farms Connected with a Diode-Based HVdc Link", IEEE Transactions on Power Electronics, vol. 25, no. 12, pp. 3095-3105, Dec. 2010.
[2] R. M. Blasco-Giménez, S. C. Añó-Villalba, J. Rodríguez-D'Derlée, S. I. Bernal-Perez, and F. Morant-Anglada, "Diode-Based HVdc Link for the Connection of Large Offshore Wind Farms", IEEE Transac-tions on Energy Conversion, vol. 26, no. 2, pp. 615-626, Mar. 2011.
[3] S. I. Bernal-Pérez, S. C. Añó-Villalba, R. M. Blasco-Giménez, and J. Rodríguez-D'Derlée, "Efficiency and Fault Ride-Through Performance of a Diode-Rectifier- and VSC-Inverter-Based HVDC Link for Off-shore Wind Farms", IEEE Transactions on Industrial Electronics, vol. 60, no. 6, pp. 2401-2409, Jun. 2013.
[4] P. Menke, R. Zurowski, T. Christ, S. Seman, G. Giering, T. Hammer, W. Zink, F. Hacker, D. Imamovic, J. Thisted, P. Brogan, and N. Goldenbaum, "2nd Generation DC Grid Access for Large Scale Offshore Wind Farms", in Proceedings of the 14th Wind Integration Workshop, Brussels, Belgium, 20th-22nd Oct. 2015.
[5] S. I. Bernal-Pérez, S. C. Añó-Villalba, and R. M. Blasco-Giménez, "Stability Analysis of HVDC-Diode Rectifier Connected Off-shore Wind Power Plants", in Proceedings of the IEEE Industrial Electronics Society 41st Annual Conference (IECON 2015), Yokohama, Japan, 9th-12th Nov. 2015, pp. 4040-4045.
[6] T. Christ, S. Seman, and R. Zurowski, "Investigation of DC Converter Nonlinear Interaction with Offshore Wind Power Park System", in Proceedings of the 2015 EWEA Offshore Conference, Copenhagen, Den-mark, 10th-12th Mar. 2015.
[7] S. I. Bernal-Pérez, "Integración híbrida multipunto en el sistema eléctrico de grandes parques eólicos marinos a través de redes de alta tensión en continua", PhD thesis, Technical University of Valencia, Valencia, Spain, Nov. 2015.
[8] https://www.promotion-offshore.net/
[9] https://www.siemens.com/
[10] J. Dorn, D. Ergin, T. Hammer, H. J. Knaak, P. Menke, J. Moller, R. Schuster, H. Stiesdal, and J. Thisted, "Converter Station with Diode Rectifier", United States Patent Application Publication US 2016/0013653 A1, 14th Jan. 2016.
[11] H. J. Knaak, P. Menke, T. Schröck, R. Schuster, and T. Westerweller, "Wind Farm Connection having a Diode Rectifier", International Patent Application Publication WO 2014/131454 A1, 4th Sep. 2014.
[12] -, "Wind Farm Connection with Diode Rectifier", European Patent Application Publication EP 3 109 963 A1, 28th Dec. 2016.
[13] -, "Wind Farm Connection with Diode Rectifier", European Patent Application Publication EP 3 109 964 A1, 28th Dec. 2016.
[14] -, "Wind Farm Connection with Diode Rectifier", European Patent Application Publication EP 3 109 966 A1, 28th Dec. 2016.
[15] E. V. Larsen, "Electric Power Transmission System for Wind Turbine and Wind Turbine Farm and Method for Operating Same", United States Patent Application Publication US 2011/0140511 A1, 16th Jun. 2011.

## Claims

1. A method for energising an offshore AC network of a HVDC-connected offshore wind farm, the method comprising the steps of:
- transporting auxiliary DC power through a HVDC cable from onshore to an offshore HVDC station having a rectifier and/or high power converter;
- transporting auxiliary DC power further from the offshore HVDC station to a DC link of a (back-to-back) converter of an energising wind turbine in the offshore wind farm through an auxiliary DC cable thereby bypassing the rectifier of the offshore HVDC station; and
- energising the offshore AC network using a grid-side converter of the energising wind turbine to convert the auxiliary DC power to AC power.

2. The method according to claim 1, wherein prior to transporting the auxiliary DC power through the HVDC cable from onshore to the offshore HVDC station, DC terminals of an offshore HVDC converter are disconnected from the HVDC cable.

3. The method according to any of the preceding claims, wherein the DC voltage at the wind turbine DC link is controlled from onshore and wherein faulty or un-operational parts of the offshore AC network are isolated before the offshore AC network is energised

4. The method according to any of the preceding claims, wherein subsequent to the energisation of the energising wind turbine at least a second wind turbine in the offshore wind farm is connected to the DC auxiliary power and energised.

5. The method according to claim 4, wherein said second wind turbine is energised subsequent to the energisation of a main transformer of the offshore HVDC station.

6. The method according to any of the preceding claims, wherein the onshore power supplying DC auxiliary power is a grid on the onshore side.

7. The method according to any of the preceding claims, wherein the auxiliary DC cable is a short low-voltage DC cable, preferably much shorter than the HVDC cable.

8. The method according to any of the preceding claims, wherein the energising wind turbine is one of the wind turbines which are closest to the offshore HVDC station, preferably selected between the 10, or 5 or most closest wind turbines.

9. The method according to any of the preceding claims, wherein the energising wind turbine is selected to be the wind turbine in the offshore wind farm which can be connected by the shortest possible low voltage DC cable.

10. A power transmission system for transmission of power between an offshore wind farm and onshore, comprising:
- at least one grid-connected voltage source converter of an energising wind turbine for converting a DC electricity to an AC electricity;
- a high power electronics converter for converting the AC electricity to high-voltage DC electricity;
- a high-voltage DC transmission link adapted to transport the high-voltage DC electricity from the power converter to onshore, and
- an auxiliary DC cable and at least one pair of auxiliary switches (S1 and S2) for connecting the high-voltage DC transmission link to the energising wind turbine to provide auxiliary power from onshore to the offshore wind farm.

11. The power transmission system according to claim 10, further comprising a control unit configured to control the auxiliary switch and modes of operation of the power transmission system and wherein the unidirectional rectifier is a diode rectifier or a thyristor based converter.

12. The power transmission system according to any of claims 10-11, having a first mode of configuration wherein the auxiliary switch is open and wherein the power transmission system is configured to transport high-voltage DC electricity from the offshore HVDC station to the onshore HVDC station.

13. The power transmission system according to any of claims 10-12, having a second mode of configuration and wherein the power transmission system is configured to provide low-voltage DC electricity from the onshore to the offshore HVDC station through the HVDC cable, then through the auxiliary DC cable to the first wind turbine bus bar, then through the front-end voltage source converter to a common offshore AC network.

14. The power transmission system according to any of claims 10-13, wherein the power converter is part of an offshore HVDC station further comprising a main transformer on the backend side of the power converter and wherein the power transmission system further comprises an offshore HVDC station switch (S5) for bypassing the offshore HVDC station and a main transformer switch (S6) for disconnecting the main transformer and the power converter.

15. The power transmission system according to any of claims 10-14, further comprising at least one transformer connected to the front-end side of the energising voltage source converter and a switch (S3) located in between and optionally a switch (S4) located between the first transformer and the offshore AC network.
